# EUROPÄISCHE PATENTSCHRIFT

(11) **EP 0 697 936 B1**
(45) Veröffentlichungstag und Bekanntmachung des Hinweises auf die Patenterteilung: **18.03.1998**
(21) Anmeldenummer: 94914372.1
(22) Anmeldetag: 14.04.1994
(51) Int. Cl.: B23Q 11/08, B23Q 7/14, B27G 19/02, B28D 1/04, B23D 47/04

(54) **STEINSÄGE MIT SCHUTZGEHÄUSEDREHTÜR- WERKSTÜCKAUFLAGETISCH-KOMBINATION**
STONE SAW WITH COMBINED PROTECTING CASE REVOLVING DOOR AND WORK TABLES
SCIE A PIERRES DONT LES TABLES DE FIXATION DE LA PIECE SONT COMBINEES AVEC LA PORTE TOURNANTE D'UN CARTER DE PROTECTION

(30) Priorität: 12.05.1993 DE 4315777; 29.10.1993 DE 4336919
(43) Veröffentlichungstag der Anmeldung: 28.02.1996
(73) Patentinhaber: ANLIKER, Markus, D-88499 Riedlingen (DE)
(72) Erfinder: ANLIKER, Markus, D-88499 Riedlingen (DE)
(74) Vertreter: Patentanwälte Eisele, Otten & Roth
(86) Internationale Anmeldenummer: EP9401159
(87) Internationale Veröffentlichungsnummer: WO9426464

(56) Entgegenhaltungen:
- DE-A- 4 027 895
- DE-C- 2 913 850
- FR-A- 1 232 145
- GB-A- 2 080 908

## Beschreibung

Die Erfindung betrifft eine Steinsäge, insbesondere für Mauerziegel, mit einem Schutzgehäuse, mit einem in diesem angeordneten Sägeblatt und mit zwei beweglichen Auflagetischen, von denen abwechselnd einer außerhalb des Schutzgehäuses mit einem Stein beladen wird, während der andere sich innerhalb des Schutzgehäuses befindet und der auf ihm liegende Stein bearbeitet wird.

Aus der deutschen Patentschrift 29 13 850 ist eine Steinsäge dieser Art bekannt. Sie umfaßt eine in der Ebene verfahrbare Brückensäge, die vollkommen gekapselt ist. Es sind zwei auf parallelen Schienenbahnen verfahrbare Auflagetische vorgesehen, die durch nebeneinander liegende, schalldicht verschließbare Öffnungen abwechselnd in Arbeitsposition gebracht werden.

Infolge des schall- und staubdichten Abschlusses verbreitet diese Säge kein unangenehmes Geräusch und keinen gesundheitsgefährdenden Staub. Außerdem ist durch die automatische Arbeitsweise innerhalb des Schutzgehäuses die Unfallgefahr gebannt. Wenn es jedoch darum geht, große Hochlochziegel zur plangenauen Ausführung vom Mauerwerk zu kürzen oder auf Gehrung zu sägen, muß eine solche Säge für den Baustellenbetrieb an wechselnden Orten geeignet sein.

Der Erfindung liegt die Aufgabe zugrunde, eine gekapselte Steinsäge der einleitend bezeichneten Art in kompakterer Bauweise zur Verfügung zu stellen.

Diese Aufgabe wird erfindungsgemäß durch die kennzeichnenden Merkmale des Anspruchs 1 gelöst. Der Lösungsansatz besteht darin, daß nicht jeder Auflagetisch durch eine eigene Türe in den gekapselten Raum hinein und wieder herausgebracht wird, sondern daß eine Drehtüre vorgesehen ist, auf deren Drehgestell beide Auflagetische angebracht sind, so daß durch eine Drehbewegung von 180° die Tische ihre Stellung wechseln. Das erlaubt eine Verkleinerung des gekapselten Raumes, birgt aber trotzdem den Vorteil in sich, daß auf dem jeweils äußeren Auflagetisch der zu sägende Stein zugerichtet werden kann, während der Stein auf dem inneren Auflagetisch gesägt wird.

Es wird vorgeschlagen, daß eine stationäre Säge verwendet wird und daß der jeweils im Schutzgehäuse befindliche Auflagetisch in der verriegelten Stellung des Drehgestells senkrecht zur Drehachse in Vorschubrichtung verfahrbar ist, wobei sich an den am Drehtisch angebrachten Abschnitt seiner Führungsbahn ein stationärer Abschnitt anschließt. Im Verlauf der Vorschubbewegung fährt also der betreffende Auflagetisch vom Drehgestell herunter und wird auf der stationären Führungsbahn, d. h. auf geeigneten Führungsschienen, auf die Säge zu bewegt.

Die Unfallgefahr ist vollkommen gebannt, da Verriegelungsmittel vorgesehen sind, die sicherstellen, daß ein Sägevorgang nur eingeleitet wird und ablaufen kann, wenn sich die Drehtüre in einer das Schutzgehäuse schließenden Winkelstellung befindet und das Drehgestell in dieser Stellung arretiert ist. Es kommen an sich bekannte Verriegelungsmittel mechanischer und/oder elektrischer Art in Betracht.

Die Wandung des Schutzgehäuses und die Drehtüre haben vorzugsweise schalldämmende Eigenschaften. In Betracht kommen Sandwich-Platten mit einem Kern aus einem Dämmstoff und einer möglichst unempfindlichen Außenhaut aus Blech oder einem geeigneten Kunststoff.

Um die Auflagetische zweckmäßigerweise möglichst klein, aber doch zur vollständigen Auflage eines Hochlochziegels in Längs- und Queranordnung aufnahmebereit zu machen, wird vorgeschlagen, daß die Drehtüre einen zweimal abgewinkelten Z-förmigen Verlauf hat, wobei die Drehachse die Mittellinie des abgewinkelten Wandstreifens bildet. Die Auflagetische erhalten dadurch eine L-Form, deren beide Tiefenabmessungen der Breite bzw. Länge des größten zu verarbeitenden Hochlochziegels entspricht.

Die Erfindung ist nicht auf eine Kreissäge beschränkt, sondern eignet sich prinzipell auch für andere Sägewerkzeuge, die dazu geeignet sind, einen auf einer Auflage liegenden Stein durch einen ebenen Schnitt in zwei Teile zu trennen.

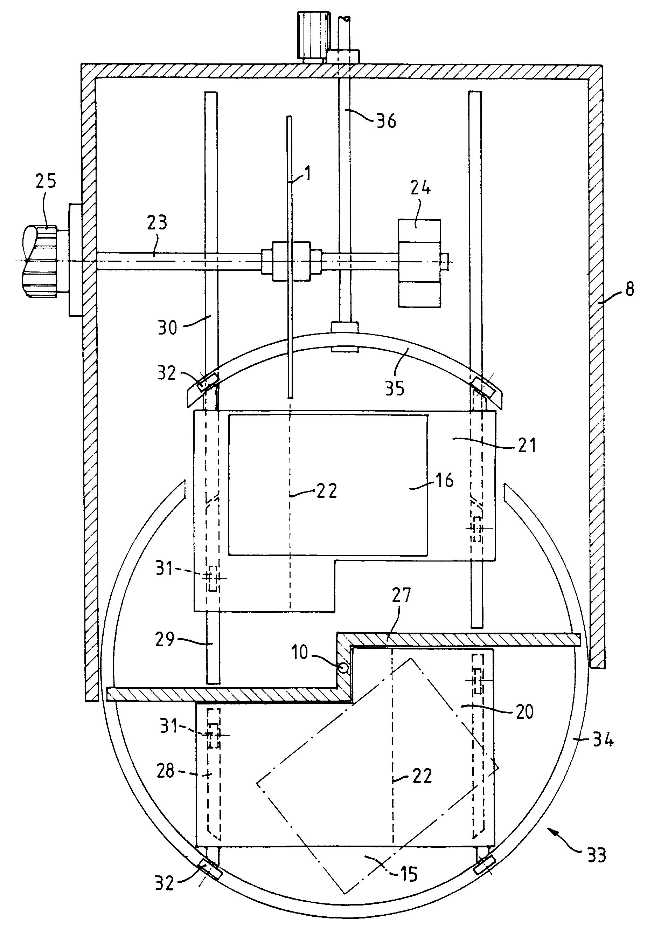

Ein Ausführungsbeispiel der Erfindung wird nachfolgend anhand der Zeichnung erläutert, die eine Draufsicht einer als Kreissäge ausgebildeten stationären Steinsäge mit verfahrbaren Auflagetischen zeigt.

Die dargestellte Kreissäge hat ein Sägeblatt 1, das auf einer Welle 23 befestigt ist. Die gesamte Sägevorrichtung ist von einem quadrischen Schutzgehäuse 8 umschlossen. Die Welle 23 ist innerhalb desselben in einem Lager 24 gelagert und wird von einem Antriebsmotor 25 angetrieben, der außerhalb des Schutzgehäuses 8 angeordnet ist. Unterhalb des Sägeblattes befindet sich eine nicht dargestellte Wanne, welche das an die Schnittstelle herangeführte Kühlwasser und den entstehenden Steinschlamm aufnimmt.

An einer Stirnfläche weist das Schutzgehäuse 8 eine rechteckige Öffnung auf. Diese ist durch ein Drehgestell, das sich um eine Achse 10 drehen kann und eine an dem Gestell befestigte Drehtüre 27 abgeschlossen. An dem Drehgestell sind auf jeder Seite der Drehtüre 27 je zwei horizontale, senkrecht zur Türe verlaufende Führungen 28 bzw. 29, z.B. U-Profilschienen, angeordnet. Zwei Auflagetische 20 und 21 sind horizontal verfahrbar an dem Drehgestell angebracht. Allerdings ist diese Verfahrbarkeit in der gezeichneten Stellung des Drehgestells nur für den innenliegenden Auflagetisch 21 gegeben. Jeder Auflagetisch hat zwei Rollen 31 oder andere Führungsglieder, die in die Führungen 28 bzw. 29 eingreifen, und zwei Rollen 32 mit zur Drehachse 10 radialen Achsen, die in eine Ringbahn 33 eingreifen. Diese Ringbahn 33 mit z. B. nach oben offenem U-förmigen Querschnitt ist über den Führungen 28 und 29 angeordnet und verläuft koaxial um die Drehachse 10. Sie setzt sich zusammen aus einem feststehenden, umfänglich größeren Ringabschnitt 34 und einem ergänzenden Bogen 35, der in Vorschubrichtung zur Säge hin verfahrbar gelagert ist, z. B. in feststehenden Führungen 30, die sich im Schutzgehäuse 8 an die Führungen 28 bzw. 29 fluchtend anschließen. Zur Bewegung des Bogens dient ein Vorschubantrieb 36, z. B. eine Spindel mit Spindelmotor oder ein Kettenantrieb.

Die Welle 23 des Sägeblatts 1 liegt höher als die Auflagetische 20 und 21. Die Auflagetische haben Schlitze oder Nuten, die sich im Bereich der gestrichelt angedeuteten Schnittlinien 22 erstrecken.

Das Drehgestell kann mit den Auflagetischen 20 und 21 nur gedreht werden, wenn beide Auflagetische ganz an der Drehtüre 27 anliegen. Dabei ruhen ihre Rollen 31 in den zugehörigen Führungen 28 bzw. 29, während die Rollen 32 auf der Ringbahn 33 laufen und dadurch an einer zentripetalen Bewegung behindert sind. Der Bogen 35 nimmt selbstverständlich seine den Kreis ergänzende Stellung ein. Gelangt das Drehgestell in die gezeichnete Position, so wird es verriegelt. In dieser Position stehen die Rollen 32 des Auflagetisches 21 im Bereich des Bogens 35. Wenn nun der Vorschubantrieb 36 den Bogen 35 zur Säge hin aus der Ringbahn 33 herauszieht, so folgt der Auflagetisch 21 dieser Bewegung, wobei seine Rollen 31 in den Führungen 29 laufen und zwar auch über die Trennstellen hinweg in die Führungen 30 hinein. Ist der Auflagetisch 21 schließlich nach Beendigung des Sägeschnittes wieder in seine Ausgangsstellung zurückgebracht, so wird die Verriegelung des Drehgestells aufgehoben, so daß dieses gewendet werden kann bis der Auflagetisch 21 mit dem gesägten Stein die Stellung des Auflagetisches 20 einnimmt. Damit ist das Schutzgehäuse 8 durch die Drehtüre 27 wieder geschlossen.

Mit der beschriebenen Steinsäge wird wie folgt gearbeitet. Zunächst wird auf den äußeren Auflagetisch 20 ein Mauerstein aufgelegt und seitlich so verschoben, daß die gewünschte Trennstelle über der Schnittlinie 22 liegt. Dann setzt die Bedienungsperson die Säge in Betrieb: Das Drehgestell dreht um 180°, wonach die Drehtüre 27 gewendet und das Schutzgehäuse 8 wieder geschlossen ist. Der ursprünglich außenliegende Auflagetisch befindet sich nun im Gehäuseinneren. Anschließend wird der Trennschnitt durchgeführt, wobei zunächst die Stellung des Drehgestells arretiert wird und auch arretiert bleibt, bis der Vorschubantrieb 36 den innenliegenden Auflagetisch zum Sägeblatt hin und wieder zurück bewegt hat. Währenddessen kann auf dem äußeren Auflagetisch schon der nächste Mauerstein bereit gelegt werden bzw. im laufenden Betrieb zuvor der gesägte Stein abgeräumt werden.

Die Drehtüre ist Z-förmig gekröpft. Auf diese Weise können die beiden Auflagetische 20 und 21 eine L-Form bekommen, so daß die zu sägenden Bausteine 15 und 16, hier Hochlochziegel mit einer Länge von 50 cm und einer Breite von 30 cm, für einen Gehrungsschnitt auch schräg gelegt werden können, wie z. B. der Baustein 15. Es ist aber auch ein Längsschnitt möglich, beispielsweise um den Stein in der Höhe zu reduzieren.

## Patentansprüche

1. Steinsäge, insbesondere für Mauerziegel (16), mit einem Schutzgehäuse (8), mit einem in diesem angeordneten Sägeblatt (1) und mit zwei beweglichen Auflagetischen (20, 21), von denen abwechselnd einer außerhalb des Schutzgehäuses (8) mit einem Stein beladen wird, während der andere sich innerhalb des Schutzgehäuses befindet und der auf ihm liegende Stein bearbeitet wird, dadurch gekennzeichnet, daß das Sägeblatt (1) stationär gelagert ist, daß die Auflagetische (20, 21) Teile eines um eine vertikale Achse (10) gelagerten Drehgestells sind, wobei das Drehgestell eine sich im wesentlichen in der Drehachsebene erstreckende Wand umfaßt, welche eine Drehtüre (27) des Schutzgehäuses (8) bildet, und daß der jeweils im Schutzgehäuse (8) befindliche Auflagetisch (21) in einer verriegelten Stellung des Drehgestells bei geschlossener Drehtüre (27) mittels einer Vorschubeinrichtung (36) senkrecht zur Drehachse (10) relativ zum Sägeblatt (1) verfahrbar ist, wobei sich an den am Drehgestell angebrachten Abschnitt (29) seiner Führungsbahn ein stationärer Abschnitt (30) anschließt.

2. Steinsäge nach Anspruch 1, dadurch gekennzeichnet, daß Verriegelungsmittel vorgesehen sind, die sicherstellen, daß ein Sägevorgang nur eingeleitet wird und ablaufen kann, wenn sich die Drehtüre (27) in einer das Schutzgehäuse (8) schließenden Winkelstellung befindet und das Drehgestell in dieser Stellung arretiert ist.

3. Steinsäge nach Anspruch 1, dadurch gekennzeichnet, daß die Wände des Schutzgehäuses (8) und die Drehtüre (27) schalldämmende Eigenschaften haben.

4. Steinsage nach Anspruch 1, dadurch gekennzeichnet, daß die Drehtüre (27) einen zweimal abgewinkelten Z-förmigen Verlauf hat, wobei die Drehachse (10) die Mittellinie des abgewinkelten Wandstreifens bildet.

## Claims

1. Stone-cutting saw, in particular for bricks (16), with a protective housing (8), with a saw blade (1) arranged in the latter and with two movable support tables (20, 21), whereof alternately one is loaded with a brick outside the protective housing (8), whilst the other is located inside the protective housing and the brick located thereon is machined, characterised in that the saw blade (1) is mounted in a stationary manner, that the support tables (20, 21) are parts of a bogie mounted about a vertical axis (10), the bogie comprising a wall extending essentially in the plane of the axis of rotation, which wall forms a rotary door (27) of the protective housing (8) and that the support table (21) located respectively in the protective housing (8) can be moved in a locked position of the bogie, with the rotary door (27) closed, by means of a feed device (36) at right angles to the axis of rotation (10) relative to the saw blade (1), a stationary section (30) adjoining the section (29) of its guide path located on the bogie.

2. Stone-cutting saw according to Claim 1, characterised in that locking means are provided, which ensure that a sawing operation is only initiated and can take place if the rotary door (27) is located in an angular position closing the protective housing (8) and the bogie is locked in this position.

3. Stone-cutting saw according to Claim 1, characterised in that the walls of the protective housing (8) and the rotary door (27) have sound-insulating properties.

4. Stone-cutting saw according to Claim 1, characterised in that the rotary door (27) has a Z-shape bent twice, the axis of rotation (10) forming the centre line of the bent wall strip.

## Revendications

1. Scie à pierre, en particulier pour briques de maçonnerie (16), comprenant un carter de protection (8) avec une lame de scie (1) disposée dans celui-ci, et deux tables mobiles d'appui (20, 21) dont l'une est alternativement chargée d'une pierre en dehors du carter de protection tandis que l'autre se trouve à l'intérieur du carter de protection et que la pierre qui se trouve dessus est façonnée,
caractérisée en ce que
- la scie à pierre (1) est montée stationnaire,
- les tables d'appui (20, 21) font partie d'un bâti tournant monté autour d'un axe vertical (10), ce bâti tournant comprenant une paroi qui s'étend sensiblement dans le plan de l'axe de rotation, et qui forme une porte tournante (27) du carter de protection (8), et
- la table d'appui (21) qui se trouve respectivement dans le carter de protection (8) peut être déplacée dans une position verrouillée du bâti tournant quand la porte tournante (27) est fermée au moyen d'un dispositif d'avancement (36) perpendiculairement à l'axe de rotation (10) par rapport à la lame de scie (1), une section stationnaire (30) se raccordant à la section (29), située sur le bâti tournant, de sa voie de guidage.

2. Scie à pierre selon la revendication 1,
caractérisée en ce que
l'on prévoit des moyens de verrouillage qui donnent l'assurance que l'on ne peut entamer un processus de sciage et le laisser se dérouler que quand la porte tournante (27) se trouve dans une position angulaire qui ferme le carter de protection (8), et quand le bâti tournant est bloqué dans cette position.

3. Scie à pierre selon la revendication 1,
caractérisée en ce que
les parois du carter de protection (8) et la porte tournante (27) ont des propriétés qui amortissent le bruit.

4. Scie à pierre selon la revendication 1,
caractérisée en ce que
la porte tournante (27) a un parcours en forme de Z, coudé deux fois à angle droit, l'axe de rotation (10) formant la ligne médiane de la bande de paroi qui est coudée à angle droit.
